# EUROPEAN PATENT APPLICATION

(11) **EP 4 745 307 A1**
(43) Date of publication of application: **20.05.2026**
(21) Application number: 24879511.4
(22) Date of filing: 25.09.2024
(51) Int. Cl.: E02F 9/00, B60K 11/06

(54) **WORK MACHINE**

(30) Priority: 19.10.2023 JP 2023180571
(71) Applicant: KOBELCO CONSTRUCTION MACHINERY CO., LTD., Hiroshima-shi, Hiroshima 731-5161 (JP)
(72) Inventor: HAYASHI, Hideki, Hiroshima-shi, Hiroshima 731-5161 (JP); KIMURA, Yasumasa, Hiroshima-shi, Hiroshima 731-5161 (JP); OMORI, Atsushi, Hiroshima-shi, Hiroshima 731-5161 (JP)
(74) Representative: TBK
(86) International application number: PCT/JP2024/034170
(87) International publication number: WO 2025/084085

(57) **Abstract**

A working machine includes: an outer wall (13) that surrounds a machine chamber (80); an engine (30) located in the machine chamber (80); and a first bulkhead (61) located in the machine chamber (80). The outer wall (13) has an outlet (75) for discharging air in the machine chamber (80) to an outside of the machine chamber (80). The first bulkhead (61) has an upwardly extending wall (64) disposed between the engine (30) and the outlet (75) and extending upward, and a laterally extending wall (65) extending in a lateral direction from an upper portion of the upwardly extending wall (64) toward the outlet (75).

## Description

### Technical Field

The present disclosure relates to a working machine, such as a hydraulic excavator.

### Background Art

A working machine generally includes an outer wall that surrounds a machine chamber and an engine located in the machine chamber. The outer wall has an outlet for discharging air in the machine chamber to an outside of the machine chamber. In this configuration, an engine sound generated from the engine leaks to the outside of the machine chamber through the outlet and causes noise. Reduction in such noise attributed to the engine sound is hence desired.

Patent Literature 1 discloses a working machine provided with a first outlet for discharging air in an axial direction of an engine output shaft and a second outlet for discharging the air upward, the first outlet and the second outlet being adjacent to each other. The working machine includes an air discharge guide that changes a flow direction of the air, which has been discharged through the first outlet in the axial direction of the engine output shaft, so that the air flows upward at an upwind position of the second outlet. The working machine avoids flow deterioration attributed to a collision of discharged air currents respectively through the first outlet and the second outlet, and reduces noise to laterally come out through the first outlet. That is to say, the technology described in Patent Literature 1 is directed to countermeasures against noise from the engine, and improvement in airflow at the first outlet (an exit for the air) where the air discharge guide is provided.

The technology described in Patent Literature 1 fails to consider airflow in the machine chamber. In this regard, it is desired to improve the airflow in the machine chamber while reducing the noise attributed to the engine sound leaking to the outside through the outlet.

### Citation List

### Patent Literature

Patent Literature 1: Japanese Unexamined Patent Publication No. 2011-208632

### Summary of Invention

The present disclosure has an object of providing a working machine that achieves improvement in airflow in a machine chamber while reducing noise attributed to an engine sound leaking to an outside through an outlet.

A working machine according to a first aspect includes: an outer wall that surrounds a machine chamber; an engine located in the machine chamber; and a first bulkhead located in the machine chamber. The outer wall has an outlet for discharging air in the machine chamber to an outside of the machine chamber. The first bulkhead has an upwardly extending wall disposed between the engine and the outlet and extending upward, and a laterally extending wall extending in a lateral direction from an upper portion of the upwardly extending wall toward the outlet.

### Brief Description of Drawings

Fig. 1 is a left side view of an example working machine according to an embodiment.
Fig. 2 is a perspective view of an upper slewing body of the working machine seen from obliquely rear left.
Fig. 3 is a plan view of an inside of a machine chamber of the upper slewing body.
Fig. 4 is a cross-sectional view taken along the line A-A in Fig. 1.

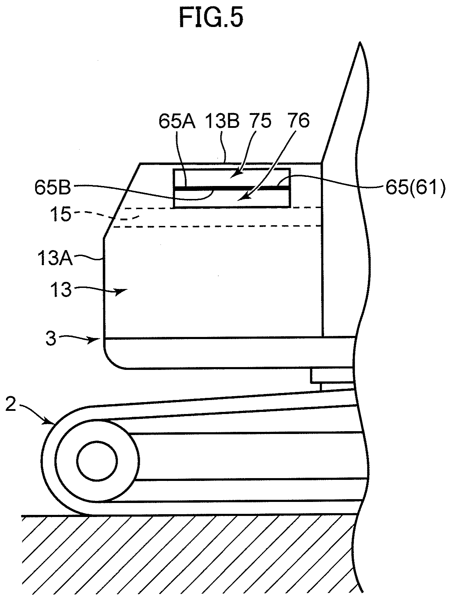

Fig. 5 is a right side view of a rear portion of the working machine.

### Description of Embodiments

Hereinafter, an embodiment of the disclosure will be described with reference to the accompanying drawings.

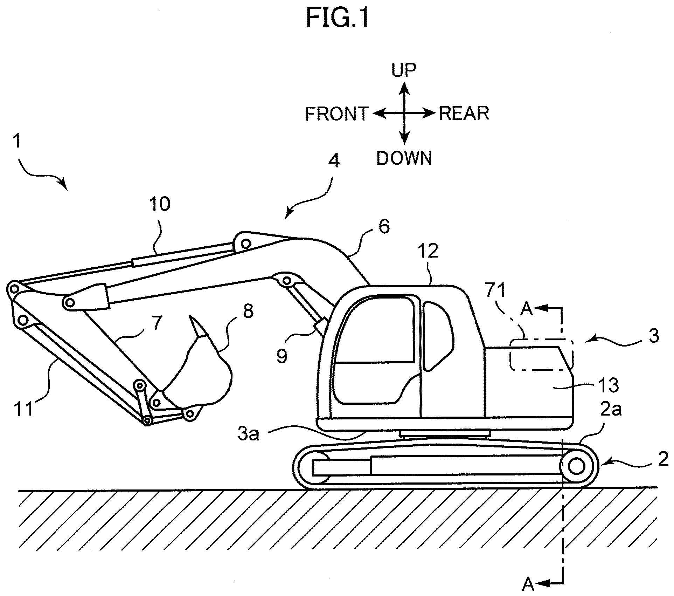

As illustrated in Fig. 1, a working machine 1 includes a lower traveling body 2 having a traveling device, an upper slewing body 3 supported on the lower traveling body 2 and configured to slew about a slewing axis extending upward and downward with respect to the lower traveling body 2, and a working device 4 supported on the upper slewing body 3. The working machine 1 according to the embodiment is a hydraulic excavator. However, a working machine in the present disclosure may be another working machine, such as a crane, a bulldozer, or other machine without limitation to the hydraulic excavator. The traveling device may be a crawler traveling device 2a illustrated in Fig. 1, or may be another traveling device having a tire (not shown).

The working device 4 includes a boom 6 attached to the upper slewing body 3 in a tiltable manner, an arm 7 rotatably attached to the boom 6, and a leading end attachment 8 rotatably attached to the arm 7. The leading end attachment 8 is a bucket in the embodiment. However, the leading end attachment may be another leading end attachment, e.g., a grapple, a fork, or a crusher.

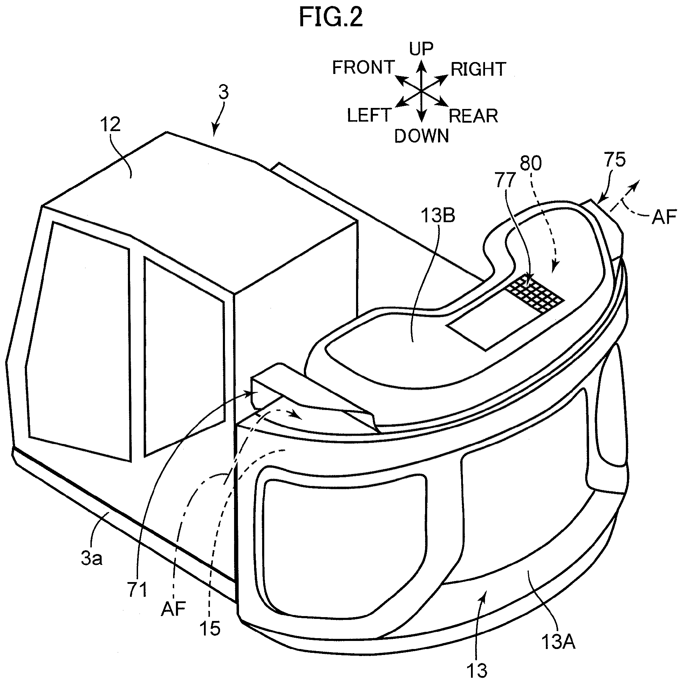

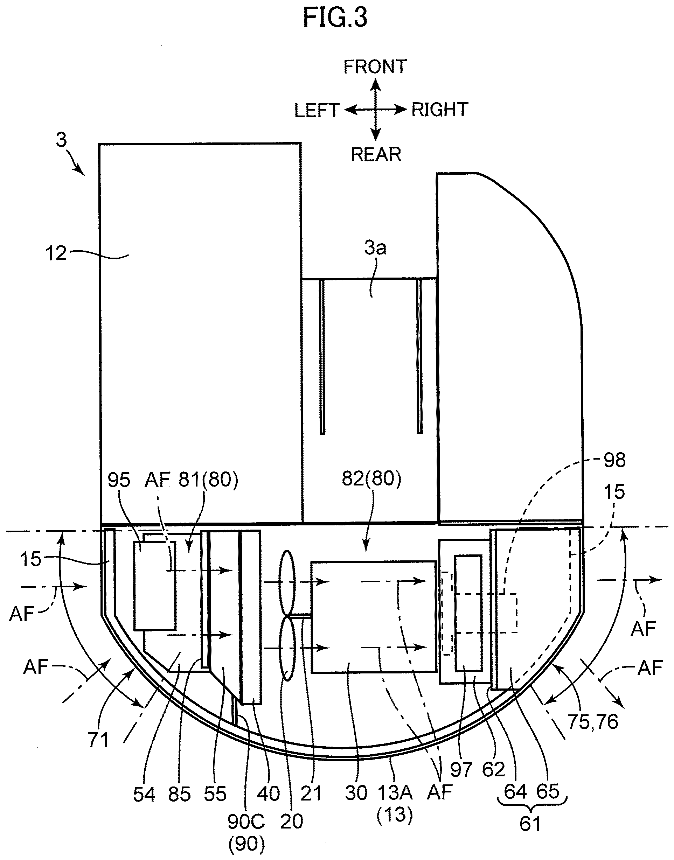

The upper slewing body 3 includes a slewing frame 3a, a cab 12 supported on the slewing frame 3a, and an outer wall 13 located in the rear of the cab 12. The outer wall 13 has, for example, a box shape, and defines a machine chamber 80. The machine chamber 80 will be described in detail later. As shown in Fig. 2 and Fig. 3, for instance, the cab 12 is located on a front left portion of the slewing frame 3a. An operator seat, a manipulation lever, a manipulation pedal, and other parts are arranged in the cab 12. A counterweight 15 is located at a rear portion of the upper slewing body 3. The counterweight 15 is a weight to keep balance.

The working machine 1 includes a hydraulic pump 98 to be described later, and a plurality of actuators. Each of the actuators is activated by receiving supply of hydraulic fluid discharged from the hydraulic pump 98. The actuators include a boom cylinder 9 for raising and lowering the boom 6, an arm cylinder 10 for rotating the arm 7, a leading end attachment cylinder 11 for rotating the leading end attachment 8, and an unillustrated hydraulic motor to make the upper slewing body 3 slew with respect to the lower traveling body 2.

The upper slewing body 3 of the working machine 1 has the machine chamber 80 surrounded by the outer wall 13. In a specific example in Fig. 2 and Fig. 3, the machine chamber 80 is located in the rear of the cab 12, but may be, for example, located on a certain side (right side) of the cab 12, or may be located in the rear of and on the side of the cab 12. For instance, as illustrated in Fig. 2, the outer wall 13 includes a side wall part 13A that covers the machine chamber 80 from the sides, and a top wall part 13B that covers the machine chamber 80 from above.

The outer wall 13 of the upper slewing body 3 has an inlet 71 and a first outlet 75. The inlet 71 is an opening for taking air or outside air on the outside of the machine chamber 80 into the machine chamber 80 as cooling air. The first outlet 75 is an opening for discharging air in the machine chamber 80 to the outside of the machine chamber 80. The outer wall 13 may further have a second outlet 76 and a third outlet 77. Each of the second outlet 76 and the third outlet 77 is an opening for discharging the air in the machine chamber 80 to the outside of the machine chamber 80.

Although the inlet 71 is located at a rear left portion of the upper slewing body 3, and each of the first outlet 75 and the second outlet 76 is located at a rear right portion of the upper slewing body 3 in the embodiment, the inlet 71 may be located at the rear right portion of the upper slewing body 3, and each of the first outlet 75 and the second outlet 76 may be located at the rear left portion of the upper slewing body 3. Alternatively, each of the inlet 71, the first outlet 75, and the second outlet 76 may be located at another portion of the upper slewing body 3. As illustrated in Fig. 2, the third outlet 77 is located around the center of the rear portion of the upper slewing body 3 (around the center in a left-rear direction at the top wall part 13B). However, the third outlet 77 may be located at another portion without limitation to the portion shown in the specific example in Fig. 2.

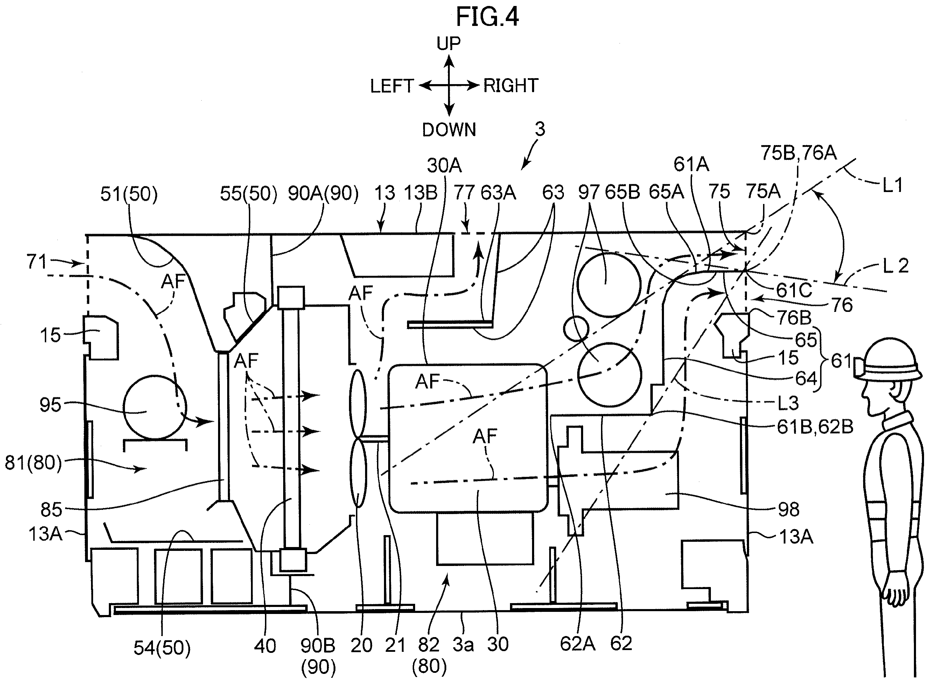

As shown in Fig. 3 and Fig. 4, the machine chamber 80 includes an air intake division 81 and an engine division 82. In the embodiment, the inlet 71, the air intake division 81, the engine division 82, and the outlets 75, 76 align in this order in a left-right direction in a top view as shown in Fig. 3.

The working machine 1 includes a cooling fan 20, the engine 30, a heat exchanger 40, an air intake guide 50, and the hydraulic pump 98. The cooling fan 20 generates airflow AF to advance in order of the inlet 71, the air intake division 81, the engine division 82, and the first outlet 75. The air intake guide 50 is located in the air intake division 81. The heat exchanger 40 is disposed between the air intake division 81 and the engine division 82. The air intake guide 50 guides the air flowing into the air intake division 81 through the inlet 71 to the heat exchanger 40. The cooling fan 20, the engine 30, and the hydraulic pump 98 are located in the engine division 82. The engine 30 drives the hydraulic pump 98.

As shown in Fig. 4, the air intake guide 50 has an inlet-side upper wall 51, an inlet-side lower wall 54, and a duct 55 (heat exchanger-side duct). The inlet-side upper wall 51 and the inlet-side lower wall 54 guide the air flowing into the air intake division 81 through the inlet 71 to the duct 55. The duct 55 further guides the guided air to the heat exchanger 40. A filter 85 is provided at the duct 55. The inlet-side upper wall 51 is located in an upper part of the air intake division 81, and the inlet-side lower wall 54 is located in a lower part of the air intake division 81.

As denoted by a dash-dotted line arrow in Fig. 4, the airflow AF entering the air intake division 81 through the inlet 71 is guided by the air intake guide 50 to enter the heat exchanger 40 while forming an approximately Z-shape or S-shape. This forms a path having such a Z-shape, resulting in effectively reducing noise attributed to an engine sound passing through the heat exchanger 40 and leaking to the outside through the inlet 71.

The working machine 1 further includes a partition 90 that separates the air intake division 81 and the engine division 82 from each other. This configuration in which the partition 90 separates the air intake division 81 and the engine division 82 from each other achieves reduction in the engine sound passing through a region except the heat exchanger 40 and advancing toward the inlet 71. In the embodiment, as shown in Fig. 4, the partition 90 includes an upper partition section 90A that closes a gap between the heat exchanger 40 and the top wall part 13B of the outer wall 13, and a lower partition section 90B that closes a gap between the heat exchanger 40 and a floor surface (e.g., an upper surface of the slewing frame 3a). Besides, as shown in Fig. 3, the partition 90 may further include a side partition section 90C that closes a gap between the heat exchanger 40 and the side wall part 13A of the outer wall 13.

As shown in Fig. 2 and Fig. 3, the rear right portion and the rear left portion of the upper slewing body 3 form a curved shape in a top view thereof. A part of the inlet 71 is located at the rear left portion, and another part of the inlet 71 is located at a left portion (a left portion of the upper slewing body 3) extending forward and rearward. The location of the part of the inlet 71 at the rear left portion forming the curved shape in this manner makes it easier to ensure an enough opening area of the inlet 71 as denoted by dash-dotted lines in Fig. 3.

As shown in Fig. 3 and Fig. 4, an air cleaner 95 is located in the air intake division 81. The air cleaner 95 purifies air in the air intake division 81, and thereafter, supplies the purified air to the engine 30 through an unillustrated pipe.

The working machine 1 includes the hydraulic pump 98 that is driven by the engine 30, and a plurality of mufflers 97 each located above the hydraulic pump 98 and configured to reduce an exhaust sound from the engine 30. The hydraulic pump 98 and the mufflers 97 are located in the engine division 82.

Hereinafter, features of the working machine 1 according to the embodiment will be described.

### [First Feature]

The working machine 1 includes a first bulkhead 61 located in the machine chamber 80. In the embodiment, the first bulkhead 61 is located in the engine division 82 of the machine chamber 80. The first bulkhead 61 has an upwardly extending wall 64 disposed between the engine 30 and the first outlet 75 and extending upward, and a laterally extending wall 65 extending in the lateral direction from the upper portion of the upwardly extending wall 64 toward the first outlet 75.

In the working machine 1, the first bulkhead 61 having the upwardly extending wall 64 disposed between the engine 30 and the first outlet 75 and the laterally extending wall 65 extending in the lateral direction from the upper portion of the upwardly extending wall 64 toward the first outlet 75 is located in the engine division 82 of the machine chamber 80. This configuration reduces an engine sound leaking to the outside through the first outlet 75, and further, smoothly guides the air in the engine division 82 of the machine chamber 80 toward the first outlet 75. In other words, the working machine 1 achieves reduction in noise from the engine 30 and improvement in airflow in the engine division 82 of the machine chamber 80. Consequently, the working machine 1 achieves improvement in the airflow in the engine division 82 of the machine chamber 80 while reducing the noise attributed to the engine sound leaking to the outside through the first outlet 75.

In the specific example in Fig. 4, the first bulkhead 61 has a substantially L-shape in a rear view of the working machine 1, i.e., in a back view thereof. Although the upwardly extending wall 64 extends in a vertical direction and the laterally extending wall 65 extends in a horizontal direction, each of the upwardly extending wall 64 and the laterally extending wall 65 may extend in another direction without limitation to the direction shown in the specific example in Fig. 4. For instance, the direction "upward" in which the upwardly extending wall 64 extends may be parallel to the vertical direction, or may be at an angle to the vertical direction. The "lateral direction" in which the laterally extending wall 65 extends may be parallel to the horizontal direction, or may be at an angle to the horizontal direction.

Further, although each of the upwardly extending wall 64 and the laterally extending wall 65 has a flat plate shape in the specific example in Fig. 4, each of the upwardly extending wall 64 and the laterally extending wall 65 may have another shape without limitation to the shape shown in the specific example in Fig. 4. For instance, the upwardly extending wall 64 may have a curved shape, or may have such a shape as to include a flat section and a curved section. Similarly, the laterally extending wall 65 may have a curved shape, or may have such a shape as to include a flat section and a curved section.

The upwardly extending wall 64 is arranged such that the upwardly extending wall 64 blocks a part of or a whole of an engine sound generated from the engine 30 and directly advancing toward the first outlet 75. The upwardly extending wall 64 is arranged such that the upwardly extending wall 64 covers a part of or a whole of the engine 30 when the engine 30 is seen from the first outlet 75.

An extent denoted by a double-headed arrow between a straight line L1 and a straight line L2 in Fig. 4 indicates an extent of a sound or direct sound linearly transmitted from the engine 30 and each muffler 97 to the first outlet 75, the sound being a part of the sound leaking to the outside of the machine chamber 80 through the first outlet 75. In the rear view of the working machine 1, the straight line L1 passes an upper end 75A of the first outlet 75 and comes into contact with the first bulkhead 61, and indicates an upper limit of the direct sound. In the rear view of the working machine 1, the straight line L2 passes a lower end 75B of the first outlet 75 and comes into contact with the muffler 97, and indicates a lower limit of the direct sound.

In the specific example in Fig. 4, the muffler 97 has an upper end located at a higher position than an upper end 61A of the first bulkhead 61 and than an upper end 30A of the engine 30. Thus, the straight line L2 indicating the lower limit of the direct sound passes the lower end 75B of the first outlet 75 and comes into contact with the muffler 97. For instance, in a case where the upper end 30A of the engine 30 is located at a higher position than the upper end of the muffler 97 and than the upper end 61A of the first bulkhead 61, the straight line L2 indicating the lower limit of the direct sound may pass the lower end 75B of the first outlet 75 and come into contact with the engine 30. For instance, in a case where the upper end 61A of the first bulkhead 61 is located at a higher position than the upper end 30A of the engine 30 and than the upper end of the muffler 97, the straight line L2 indicating the lower limit of the direct sound may pass the lower end 75B of the first outlet 75 and come into contact with the first bulkhead 61.

As shown in Fig. 4, the extent of the engine sound and a sound of the muffler 97 each leaking to the outside through the first outlet 75 is at a relatively high position from the ground. This achieves reduction in the noise that a person who is near the working machine 1 feels.

As denoted by a dash-dotted line arrow in Fig. 4, the airflow AF having entered the engine division 82 advances while forming an approximately Z-shape or S-shape to reach the first outlet 75 or the second outlet 76, and goes out to the outside of the machine chamber 80 through the first outlet 75 or the second outlet 76. This configuration effectively reduces the noise attributed to the engine sound leaking to the outside through the first outlet 75 and the second outlet 76.

### [Second Feature]

In the working machine 1 having the second feature, the outer wall 13 further has the second outlet 76 for discharging the air in the engine division 82 of the machine chamber 80 to the outside of the machine chamber 80. The second outlet 76 is located below the first outlet 75. The laterally extending wall 65 has an upper guide surface 65A being an upper surface to guide the air in the engine division 82 of the machine chamber 80 to the first outlet 75, and a lower guide surface 65B being a lower surface to guide the air in the engine division 82 of the machine chamber 80 to the second outlet 76. In this configuration, the upper guide surface 65A and the lower guide surface 65B of the laterally extending wall 65 smoothly guide the air in the engine division 82 of the machine chamber 80 respectively to the first outlet 75 and the second outlet 76.

In the specific example in Fig. 4, the laterally extending wall 65 defines a position of the lower end 75B of the first outlet 75 and a position of an upper end 76A of the second outlet 76. The top wall part 13B or the side wall part 13A of the outer wall 13 defines a position of the upper end 75A of the first outlet 75. Although an upper surface of the counterweight 15 defines a position of a lower end 76B of the second outlet 76, the side wall part 13A of the outer wall 13 may define the position.

The upper surface of the counterweight 15 has a thickness (in a direction of the airflow AF) which is greater than a thickness of the side wall part 13A of the outer wall 13. The upper surface of the counterweight 15 has an upstream end in the direction of the airflow AF that is located upstream of a downstream end 61C of the first bulkhead 61 in the airflow AF. This configuration effectively prevents a foreign matter, such as rainwater or dust, from entering the machine chamber 80 (engine division 82) through the second outlet 76. The downstream end 61C of the first bulkhead 61 serves as a downstream end or right end of the first bulkhead 61 in the airflow AF, and further serves as a downstream end 61C of the laterally extending wall 65.

In the embodiment, the laterally extending wall 65 extends laterally (rightward) in the left-right direction from the upwardly extending wall 64 to reach a side surface (right surface) of the side wall part 13A of the outer wall 13. It is noted here that a side end (right end) of the laterally extending wall 65 may not reach the side surface (right surface) of the side wall part 13A, and may be located between an upper end of the upwardly extending wall 64 and the side surface (right surface) of the side wall part 13A.

The upwardly extending wall 64 is disposed between the engine 30 and the second outlet 76 as well as between the engine 30 and the first outlet 75. In this configuration, the upwardly extending wall 64 is arranged such that the upwardly extending wall 64 blocks a part of or a whole of an engine sound generated from the engine 30 and directly advancing toward the second outlet 76. The upwardly extending wall 64 is arranged such that the upwardly extending wall 64 covers a part of or a whole of the engine 30 when the engine 30 is seen from the second outlet 76.

In Fig. 4, a straight line L3 passes the downstream end 61C of the first bulkhead 61 and a lower end 61B of the first bulkhead 61 in the rear view of the working machine 1. The lower end 61B of the first bulkhead 61 is located at a lower position than the lower end 76B of the second outlet 76.

In the embodiment, the engine 30 is located upstream of the straight line L3 in the airflow AF in the rear view of the working machine 1. This achieves effective suppression of leakage of the engine sound, which is generated from the engine 30, to the outside through the second outlet 76. Moreover, in the embodiment, the muffler 97 is located upstream of the straight line L3 in the airflow AF in the rear view of the working machine 1. This achieves effective suppression of leakage of a sound, which is generated from the muffler 97, to the outside through the second outlet 76.

### [Third Feature]

The working machine 1 having the third feature further includes a second bulkhead 62 disposed between the hydraulic pump 98 and the mufflers 97. The second bulkhead 62 is configured to separate a region for arrangement of the hydraulic pump 98 and a region for arrangement of the mufflers 97 from each other. Hence, even if hydraulic fluid from the hydraulic pump 98 disperses therearound, this configuration prevents the hydraulic fluid from adhering to each muffler 97.

In the specific example in Fig. 4, the mufflers 97 include a first muffler 97 and a second muffler 97 located above the first muffler 97. The mufflers 97 are located directly above the hydraulic pump 98, but may not be required to be located directly above the hydraulic pump 98. The mufflers 97 are located downstream of the engine 30 in the airflow AF. The hydraulic pump 98 is located downstream of the engine 30 in the airflow AF. The mufflers 97 may be located upstream of the engine 30 in the airflow AF, and the hydraulic pump 98 may be located upstream of the engine 30 in the airflow AF.

### [Fourth Feature]

In the working machine 1 having the fourth feature, the second bulkhead 62 disposed between the hydraulic pump 98 and muffler 97 extends from a position adjacent to the engine 30 toward a lower portion of the upwardly extending wall 64. In this configuration, the second bulkhead 62 is configured to guide the air (airflow AF) around the engine 30 to the upwardly extending wall 64 of the first bulkhead 61 in addition to separating the region for the arrangement of the hydraulic pump 98 and the region for the arrangement of the mufflers 97 from each other.

The second bulkhead 62 has an upstream end 62A being an end at the position adjacent to the engine 30, and a downstream end 62B being another end adjacent to or connected to the lower portion of the upwardly extending wall 64. The second bulkhead 62 disposed between the hydraulic pump 98 and the muffler 97 extends from the upstream end 62A to the downstream end 62B in the lateral direction and toward the upwardly extending wall 64. The "lateral direction" in which the second bulkhead 62 extends may be parallel to the horizontal direction, or may be at an angle to the horizontal direction. Although the second bulkhead 62 has a flat plate shape in the specific example in Fig. 4, the second bulkhead 62 may have another shape without limitation to the shape shown in the specific example in Fig. 4. For instance, the second bulkhead 62 may have a curved shape, or may have such a shape as to include a flat section and a curved section.

### [Fifth Feature]

In the working machine 1 having the fifth feature, the first outlet 75 has the upper end 75A located at a higher position than the upper end 30A of the engine 30, the first bulkhead 61 has the upper end 61A located at a higher position than the upper end 30A of the engine 30, and the first bulkhead 61 has the lower end 61B located at a lower position than the upper end 30A of the engine 30. In the configuration in which the first outlet 75 is deviated upward relative to the engine 30 in an up-down direction as shown in Fig. 4, the first bulkhead 61 is also deviated upward relative to the engine 30 so as to be effectively disposed between the engine 30 and the first outlet 75. This configuration achieves effective blocking of a part of the engine sound advancing from the engine 30 toward the first outlet 75.

### [Sixth Feature]

In the working machine 1 having the sixth feature, the first outlet 75 is located at the side wall part 13A of the outer wall 13, and the first bulkhead 61 is covered with the top wall part 13B of the outer wall 13 located above the first bulkhead 61. The configuration in which the first outlet 75 is located at the side wall part 13A of the outer wall 13 and the top wall part 13B of the outer wall 13 covers the first bulkhead 61 from above can prevent a foreign matter, such as rainwater or dust, from entering the machine chamber.

### [Seventh Feature]

In the working machine 1 having the seventh feature, as shown in Fig. 3, the outer wall 13 has a rear right portion and a rear left portion forming a curved shape in a top view thereof, and the first outlet 75 is located at the rear right portion. In this configuration, at least a part of the first outlet 75 is located at the rear right portion forming the curved shape. The configuration thus makes it easier to ensure an enough opening area of the first outlet 75. In the specific example in Fig. 3, a part of the first outlet 75 is located at the rear right portion, and another part of the first outlet 75 is located at a right portion (a right portion of the upper slewing body 3) extending forward and rearward.

### [Eighth Feature]

In the working machine 1 having the eighth feature, as shown in Fig. 2 and Fig. 4, the outer wall 13 further has the third outlet 77 for discharging the air in the engine division 82 of the machine chamber 80 to the outside of the machine chamber 80. The third outlet 77 is located at the top wall part 13B of the outer wall 13. This configuration makes it easier to ensure an enough opening area of an exit for discharging the air in the machine chamber 80 to the outside of the machine chamber 80.

### [Ninth Feature]

The working machine 1 having the ninth feature further includes a third bulkhead 63 located below the third outlet 77 and above the engine 30. The third bulkhead 63 has an upper surface 63A that overlaps the third outlet 77 in a top view. This configuration can prevent a foreign matter, such as rainwater or dust, from entering the engine division 82 of the machine chamber 80 through the third outlet 77. The upper surface 63A of the third bulkhead 63 preferably has such a large dimension or area as to overlap the whole of the third outlet 77 in a top view. The configuration can further effectively prevent a foreign matter, such as rainwater or dust, from entering the engine division 82 of the machine chamber 80 through the third outlet 77.

The third bulkhead 63 may have a substantially L-shape portion in a rear view as shown in Fig. 4. In this configuration, as denoted by a dash-dotted line arrow in Fig. 4, the airflow AF having entered the engine division 82 advances while forming an approximately Z-shape or S-shape to reach the third outlet 77, and goes out to the outside of the machine chamber 80 through the third outlet 77. This configuration effectively reduces the noise attributed to the engine sound leaking to the outside through the third outlet 77.

### [Modifications]

Heretofore, the embodiment of the disclosure is described, but the disclosure is not limited to the embodiment and includes, for example, the modifications described below.

### (A) Outlet

Although the outer wall 13 has the second outlet 76 and the third outlet 77 in addition to the first outlet 75 in the embodiment, one of or both the second outlet 76 and the third outlet 77 may be excludable.

### (B) Second Bulkhead and Third Bulkhead

Although the working machine 1 includes the second bulkhead 62 and the third bulkhead 63 in addition to the first bulkhead 61 in the embodiment, one of or both the second bulkhead 62 and the third bulkhead 63 may be excludable.

Conclusively, the present disclosure provides a working machine that achieves improvement in airflow in a machine chamber while reducing noise attributed to an engine sound leaking to an outside through an outlet.

A working machine according to a first aspect includes: an outer wall that surrounds a machine chamber; an engine located in the machine chamber; and a first bulkhead located in the machine chamber. The outer wall has an outlet for discharging air in the machine chamber to an outside of the machine chamber. The first bulkhead has an upwardly extending wall disposed between the engine and the outlet and extending upward, and a laterally extending wall extending in a lateral direction from an upper portion of the upwardly extending wall toward the outlet.

In the working machine according to the first aspect, the first bulkhead having the upwardly extending wall disposed between the engine and the outlet and the laterally extending wall extending in the lateral direction from an upper portion of the upwardly extending wall toward the outlet is located in the machine chamber. This configuration reduces an engine sound leaking to the outside through the outlet, and further smoothly guides the air in the machine chamber toward the outlet. In other words, the working machine according to the first aspect achieves reduction in noise from the engine and improvement in airflow in the machine chamber. Consequently, the working machine according to the first aspect achieves improvement in the airflow in the machine chamber while reducing the noise attributed to the engine sound leaking to the outside through the outlet.

The working machine according to a second aspect preferably further includes, in the working machine according to the first aspect, a configuration to be described below. Specifically, in the working machine according to the second aspect, preferably, the outlet serves as a first outlet, the outer wall further has a second outlet for discharging the air in the machine chamber to the outside of the machine chamber, the second outlet being located below the first outlet, and the laterally extending wall has an upper guide surface being an upper surface to guide the air in the machine chamber to the first outlet, and a lower guide surface being a lower surface to guide the air in the machine chamber to the second outlet. In the second aspect, the upper guide surface and the lower guide surface of the laterally extending wall smoothly guide the air in the machine chamber respectively to the first outlet and the second outlet.

The working machine according to a third aspect preferably further includes, in the working machine according to the first or second aspect, a configuration to be described below. Specifically, the working machine according to the third aspect preferably further includes: a hydraulic pump that is driven by the engine; a muffler located above the hydraulic pump and configured to reduce an exhaust sound from the engine; and a second bulkhead disposed between the hydraulic pump and the muffler. In the third aspect, the second bulkhead is configured to separate a region for arrangement of the hydraulic pump and a region for arrangement of the muffler from each other. Hence, even if hydraulic fluid from the hydraulic pump disperses therearound, this configuration prevents the hydraulic fluid from adhering to the muffler.

The working machine according to a fourth aspect preferably further includes, in the working machine according to the third aspect, a configuration to be described below. Specifically, in the working machine according to the fourth aspect, preferably, the second bulkhead disposed between the hydraulic pump and the muffler extends from a position adjacent to the engine toward a lower portion of the upwardly extending wall. In the fourth aspect, the second bulkhead is configured to guide the air around the engine to the upwardly extending wall of the first bulkhead in addition to separating the region for the arrangement of the hydraulic pump and the region for the arrangement of the muffler from each other.

The working machine according to a fifth aspect preferably further includes, in the working machine according to any one of the first to fourth aspects, a configuration to be described below. Specifically, in the working machine according to the fifth aspect, preferably, the outlet has an upper end located at a higher position than an upper end of the engine, the first bulkhead has an upper end located at a higher position than the upper end of the engine, and the first bulkhead has a lower end located at a lower position than the upper end of the engine. In the fifth aspect in which the outlet is deviated upward relative to the engine in the up-down direction, the first bulkhead is also deviated upward relative to the engine so as to be effectively disposed between the engine and the outlet. This configuration achieves effective blocking of a part of the engine sound advancing from the engine toward the outlet.

The working machine according to a sixth aspect preferably further includes, in the working machine according to any one of the first to fifth aspects, a configuration to be described below. Specifically, in the working machine according to the sixth aspect, preferably, the outlet is located at a side wall part of the outer wall, and the first bulkhead is covered with a top wall part of the outer wall located above the first bulkhead. The sixth aspect in which the outlet is located at the side wall part of the outer wall and the top wall part of the outer wall covers the first bulkhead from above makes it possible to prevent a foreign matter, such as rainwater or dust, from entering the machine chamber.

The working machine according to a seventh aspect preferably further includes, in the working machine according to any one of the first to sixth aspects, a configuration to be described below. Specifically, in the working machine according to the seventh aspect, preferably, the outer wall has a rear right portion and a rear left portion forming a curved shape in a top view thereof, and the outlet is located at the rear right portion or the rear left portion. In the seventh aspect, at least a part of the outlet is located at the rear right portion or the rear left portion forming the curved shape. The configuration thus makes it easier to ensure an enough opening area of the outlet.

The working machine according to an eighth aspect preferably further includes, in the working machine according to any one of the first to seventh aspects, a configuration to be described below. Specifically, in the working machine according to the eighth aspect, the outlet may serve as a first outlet, the outer wall may further have a third outlet for discharging the air in the machine chamber to the outside of the machine chamber, and the third outlet may be located at a top wall part of the outer wall. The eighth aspect makes it easier to ensure an enough opening area of an exit for discharging the air in the machine chamber to the outside of the machine chamber.

The working machine according to a ninth aspect preferably further includes, in the working machine according to the eighth aspect, a configuration to be described below. Specifically, the working machine according to the ninth aspect preferably includes a third bulkhead located below the third outlet and above the engine. The third bulkhead preferably has an upper surface that overlaps the third outlet in a top view. The ninth aspect makes it possible to prevent a foreign matter, such as rainwater or dust, from entering the machine chamber through the third outlet. In the ninth aspect, the upper surface of the third bulkhead preferably has such a large dimension or area as to overlap the whole of the third outlet in a top view. The configuration can further effectively prevent a foreign matter, such as rainwater or dust, from entering the machine chamber through the third outlet.

## Claims

1. A working machine, comprising:
an outer wall that surrounds a machine chamber;
an engine located in the machine chamber; and
a first bulkhead located in the machine chamber, wherein
the outer wall has an outlet for discharging air in the machine chamber to an outside of the machine chamber, and
the first bulkhead has an upwardly extending wall disposed between the engine and the outlet and extending upward, and a laterally extending wall extending in a lateral direction from an upper portion of the upwardly extending wall toward the outlet.

2. The working machine according to claim 1, wherein the outlet serves as a first outlet,
the outer wall further has a second outlet for discharging the air in the machine chamber to the outside of the machine chamber, the second outlet being located below the first outlet, and
the laterally extending wall has an upper guide surface being an upper surface to guide the air in the machine chamber to the first outlet, and a lower guide surface being a lower surface to guide the air in the machine chamber to the second outlet.

3. The working machine according to claim 1 or 2, further comprising:
a hydraulic pump that is driven by the engine;
a muffler located above the hydraulic pump and configured to reduce an exhaust sound from the engine; and
a second bulkhead disposed between the hydraulic pump and the muffler.

4. The working machine according to claim 3, wherein the second bulkhead disposed between the hydraulic pump and the muffler extends from a position adjacent to the engine toward a lower portion of the upwardly extending wall.

5. The working machine according to any one of claims 1 to 4, wherein the outlet has an upper end located at a higher position than an upper end of the engine,
the first bulkhead has an upper end located at a higher position than the upper end of the engine, and
the first bulkhead has a lower end located at a lower position than the upper end of the engine.

6. The working machine according to any one of claims 1 to 5, wherein the outlet is located at a side wall part of the outer wall, and
the first bulkhead is covered with a top wall part of the outer wall located above the first bulkhead.

7. The working machine according to any one of claims 1 to 6, wherein the outer wall has a rear right portion and a rear left portion forming a curved shape in a top view thereof, and
the outlet is located at the rear right portion or the rear left portion.

8. The working machine according to any one of claims 1 to 7, wherein the outlet serves as a first outlet, and
the outer wall further has a third outlet for discharging the air in the machine chamber to the outside of the machine chamber, the third outlet being located at a top wall part of the outer wall.

9. The working machine according to claim 8, further comprising a third bulkhead located below the third outlet, wherein
the third bulkhead has an upper surface that overlaps the third outlet in a view from above.
